# EUROPEAN PATENT SPECIFICATION

(11) **EP 0 532 160 B1**
(45) Date of publication and mention of the grant of the patent: **16.09.1998**
(21) Application number: 92306142.8
(22) Date of filing: 02.07.1992
(51) Int. Cl.: G06K 19/077

(54) **Card grounding system**
System zur Erdung von einer Karte
Système de mise à la masse pour carte

(30) Priority: 09.09.1991 US 756940
(43) Date of publication of application: 17.03.1993
(60) Divisional application: 95201431.4
(73) Proprietor: ITT Manufacturing Enterprises, Inc., New York, NY 10019-5490 (US)
(72) Inventor: Perkins, Carl Curtiss, Irvine, CA 92714 (US)
(74) Representative: Vaufrouard, John Charles

(56) References cited:
- EP-A- 0 417 648
- ELEKTRONIK OEM AK vol. 37, no. 17, 19 August 1988, M NCHEN pages 42 - 43 'Speicher : viel leistung wenig platz'
- PATENT ABSTRACTS OF JAPAN vol. 11, no. 147 (P-575)14 May 1987
- PATENT ABSTRACTS OF JAPAN vol. 16, no. 350 (M-1287)28 July 1992

## Description

The present invention relates to IC cards and relates more specifically to such cards having grounding arrangements.

Memory cards are commonly constructed with a moulded plastic body having opposite sides and ends, a combination circuit board and connector that is installed in the body, and top and bottom metallic covers installed at the top and bottom of the body. Such memory cards are especially useful in electronic equipment or devices of very small thickness, such as laptop computers that may have a width and length of 8 1/2 inches by 11 inches, and a thickness of much less than one inch. Standard JEIDA cards have a thickness, or height, of 3.3 or five millimetres, which enables them to be inserted into thin slots of the electronic device.

An IC card according to the preamble of claim 1 is described in Elektronik, volume 37, number 9, 19th August 1988 at pages 42 to 43. JP-A-02 239 699, of which there is an English-language abstract in Patent Abstracts of Japan, volume 14, number 557, (E-1011) 21/09/90, describes a printed circuit board with high-frequency shielding provided by shielding covers attached by collars to ground planes at the periphery of the circuit board.

European Patent Application Number 0417648A3 discloses an IC card which comprises a cover formed by a metal panel having resilient projections and a frame formed of synthetic resin having recesses corresponding to the resilient projections. The cover is mounted on the frame by engaging the projections with respective recesses to secure the cover on the frame. The arrangement provides a degree of shielding of the card against electromagnetic interference. The present invention seeks to provide an improved construction.

In accordance with the present invention there is provided an IC card with a frame having laterally spaced opposite sides and longitudinally spaced front and rear ends and including a body having laterally spaced side beams, the frame having first and second conductive covers each of which has a peripheral cover portion, with one of the covers being a top cover that lies over the body and the other cover being a bottom cover that lies under the body, each beam having an inner first portion sandwiched between the cover peripheral portions, and each beam having an outer second portion which lies outside the board and the cover peripheral portions, a circuit board assembly mounted to the body, with the circuit board assembly including a board having a ground plane and at least one circuit component mounted on the board, the board having a peripheral board portion and characterised in that the ground plane includes a peripheral ground plane portion lying at the board peripheral portion and electrically connected to both of the covers and in that the body side beams have conductive surface portions electrically connected to the peripheral ground plane portion and in that at least one of the covers has a bent edge that is directly engaged with the side beam conductive surface portions.

In accordance with one embodiment of the present invention, an IC (integrated circuit) memory card is provided which enables grounding of the card during its insertion into a slot of an electronic device. The card has a frame that includes a moulded body with opposite sides and forward and rearward ends, which holds a circuit board assembly having a ground plane and which holds a connector connected to the circuit board. The frame has an electrically conductive region connected to the ground plane of the circuit board.

The body of the card frame can be moulded of electrically conductive material. The electrically conductive body provides good EMI (electromagnetic interference) shielding for the card (in conjunction with conductive top and bottom covers of the frame).

By way of example the present invention will be best understood from the following description of embodiments thereof when read in conjunction with the accompanying drawings, in which:-
Figure 1 is an isometric view of an IC memory card according to the present invention and an electronic device in the form of a laptop computer;
Figure 2 is a sectional top view of the memory card and a portion of the electronic device of Figure 1;
Figure 3 is an exploded isometric view of the memory card of Figure 2;
Figure 4 is an isometric view of just the body of the frame of the memory card of Figure 3;
Figure 5 is a partial sectional view of a memory card taken on the line 5 - 5 of Figure 2; and
Figure 6 is a side view of a combination of connector and circuit board assembly of the card of Figure 3.

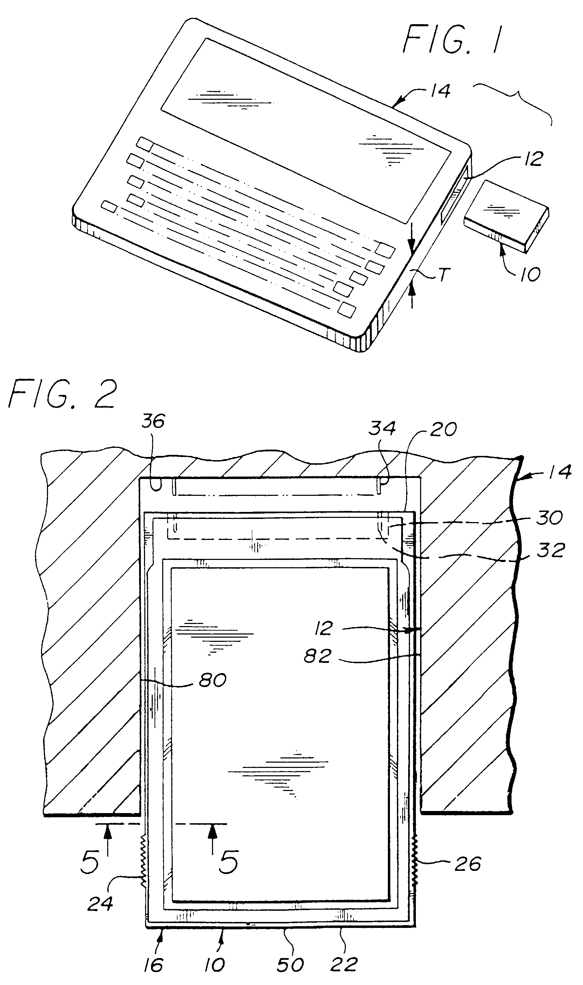

Referring now to the drawings, Figure 1 illustrates an IC (integrated circuit) memory card 10 of the present invention that is adapted to be inserted into a slot 12 of an electronic device 14, the particular device shown being a laptop computer. One style of electronic computer has a width and length of 8.5 inches and 11 inches respectively and a thickness T that is as small as possible, preferably a small fraction of an inch. Such a laptop computer can be carried around in space designed to be occupied by ordinary sheets of paper or booklets. One source of concern in using memory cards, is that the card may have a considerable static electric charge, which must be dissipated prior to full insertion of the card into the device, to avoid damage to components in the electronic device.

Figure 2 shows the memory card 10 as it is being inserted into the slot 12 of the device 14. The memory card includes a frame 16 with forward and rearward ends 20, 22 and opposite sides 24, 26. A connector 30 is mounted at the forward end of the frame and has multiple socket contacts 32. The electronic device has multiple corresponding pin contacts 34 at the front end 36 of the slot, which fully engage the socket contacts when the card is fully inserted into the slot. The connector 30 has a housing moulded of dielectric material with holes that hold the card contacts 32.

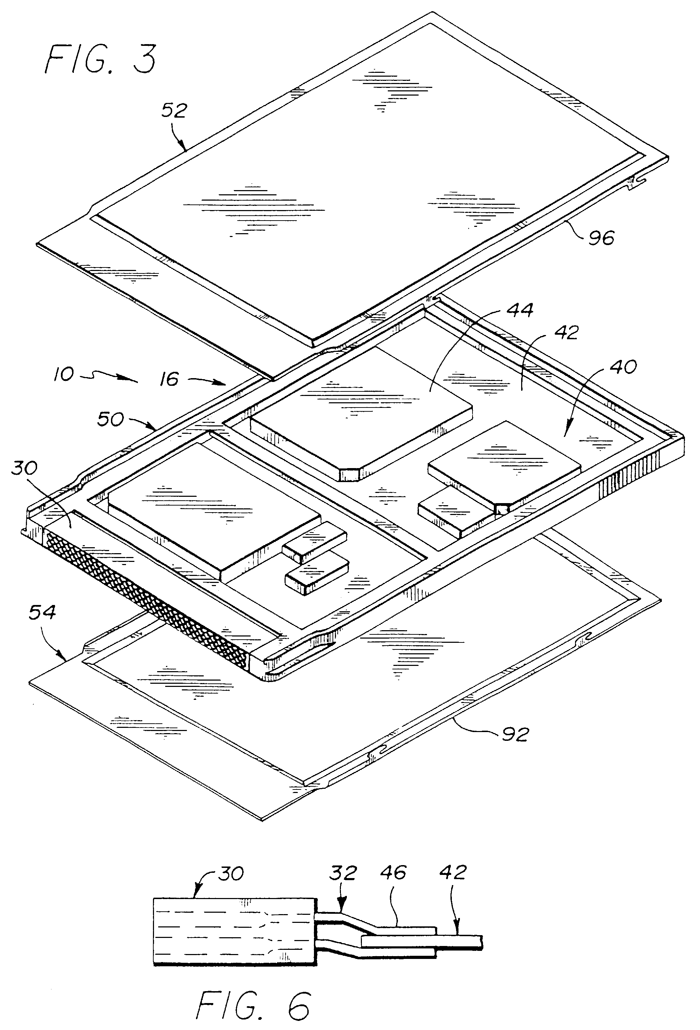

Figure 3 shows details of the memory card 10, which includes the frame 16 and connector 30 that is mounted at the forward end of the frame. A circuit board assembly 40 that is mounted on the frame, includes a circuit board 42 and a plurality of circuit components 44 mounted on the board. Figure 6 illustrates how the rear ends 46 of the connector socket contacts 32 are connected to conductive tracks on the board 42. The frame 16 (Figure 3) includes an injection moulded body 50 and upper and lower electrically conductive covers 52, 54 that can be mounted on the top and bottom of the frame body 50. The card is assembled by first installing the combination circuit board assembly 40 and connector 30 on the body 50. Then the upper and lower covers 52,54 are attached to opposite faces of the body.

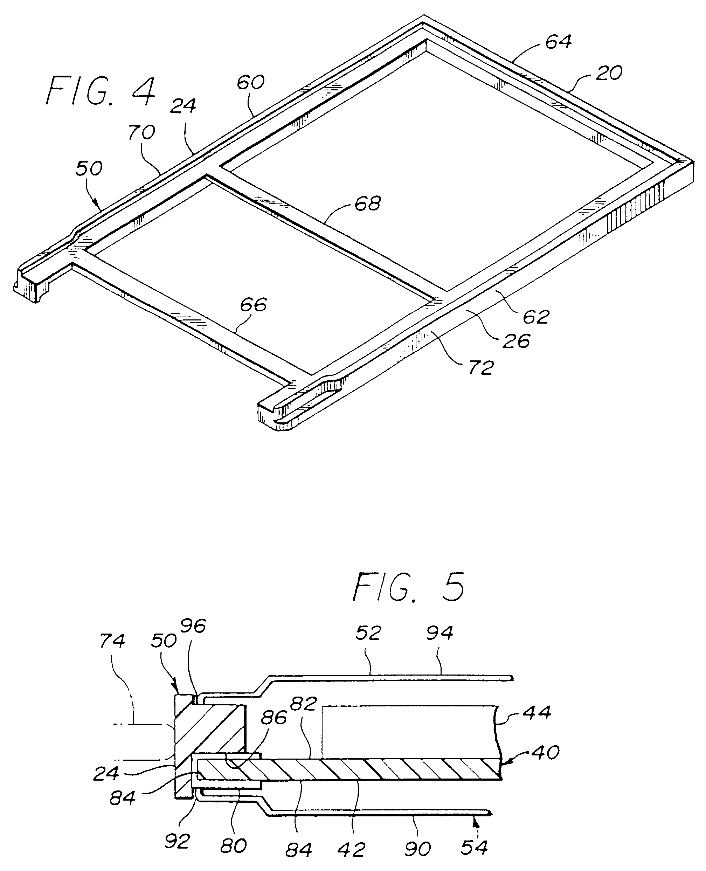

Figure 4 illustrates details of the moulded body 50. The body includes a pair of side beams 60, 62 forming the opposite sides or side edges 24, 26 of the card, and a rear beam 64 forming the rear end 22 of the card. The body also includes a pair of cross beams 66, 68 which strengthen the body.

In accordance with the present invention, the injection moulded body 50 is formed of injection moulded plastic material which is electrically conductive. A variety of plastic conductive materials are known, which often include multiple particles or fibres of conductive material, such as silver, embedded in a dielectric plastic material such as a polyester. Although the electrical resistivity of moulded plastic material is much higher than that of some metals such as silver and copper, often having a bulk resistivity that is about two orders of magnitude greater than that of copper (whose electrical resistivity is 1.7 microhm-centimetre) the resistivity of such conductive plastic material is moderate and they are considered to be electrically conductive (their resistivities are less than four orders of magnitude greater than that of copper). The use of an electrically conductive body results in important advantages for the memory card. One advantage is that the conductive side and rear beams provide protection against EMI (electromagnetic interference) that might otherwise pass between the metal upper and lower covers 52, 54 of the frame. The circuitry in highly compact electronic devices, such as laptop computers, is typically very close together and it is important to minimise electromagnetic interference between components in the card and those in the electronic device.

Figure 5 illustrates some details of the connection of the circuit board assembly 40 and the electrically conductive body 50 of the frame. The circuit board 42 of the assembly includes a ground plane 80 of electrically conductive material such as foil, which is connected to grounded locations on the electronic components on the board. The ground plane lies on the opposite faces 82, 84 of the board adjacent to the edges 84 of the board. When the card is assembled as shown in Figure 5, the ground plane 80 lies facewise against a surface 86 of the frame body 50, to ground the body 50. The bottom cover 54 has a horizontally-extending face 90 and has an edge portion 92 that is bent to extend largely vertically. The edge of the edge portion bears against the ground plane at 80, to ensure that the lower cover 54 is maintained at the same potential as the ground plane of the circuit board and the conductive body 50. The top cover 52 also has a face 94 and a bent edge portion 96 whose edge contacts the conductive body to keep the upper cover grounded. This construction avoids the need to use springs or the like to connect the top and bottom covers to each other and to the ground plane, as used in U.S. Patent No. 4,780,791.

Thus, the invention provides a memory card that can be inserted into the slot of an electronic device. The card can include a frame with a body having portions lying along opposite sides and the rear end of the card, with the body formed of electrically conductive material. Forming the body of electrically conductive material has the additional advantage of providing EMI (electromagnetic interference) shielding along most of the edge area of the card.

## Claims

1. An IC card with a frame (16) having laterally spaced opposite sides (24,26) and longitudinally spaced front and rear ends (20,22) and including a body (50) having laterally spaced side beams (60,62), the frame having first and second conductive covers (52,54) each of which has a peripheral cover portion, with one of the covers (52) being a top cover that lies over the body (50) and the other cover (54) being a bottom cover that lies under the body (50), each beam having an inner first portion (86) sandwiched between the cover peripheral portions, and each beam (60,62) having an outer second portion which lies outside the board (42) and the cover peripheral portions, a circuit board assembly (40) mounted to the body (50), with the circuit board assembly (40) including a board (42) having a ground plane (80) and at least one circuit component (44) mounted on the board (42), the board (42) having a peripheral board portion and characterised in that the ground plane (80) includes a peripheral ground plane portion lying at the board peripheral portion and electrically connected to both of the covers (52,54) and in that the body side beams (60,62) have conductive surface portions (86) electrically connected to the peripheral ground plane portion and in that at least one of the covers (52) has a bent edge (96) that is directly engaged with the side beam conductive surface portions.

2. An IC card as claimed in claim 1, characterised in that one of the covers (54) has a bend-over edge (92) that presses directly against said ground plane portion.

3. An IC card as claimed in claim 1 or 2, characterised in that the outer second portion of each beam (60,62) is thicker than the inner portion and protects the edges of the board (42) and the covers (52,54).

4. An IC card as claimed in any one of claims 1 to 3, characterised in that the body (50) is molded of electrically conductive material that forms the side beams (60,62), and the side beams (60,62) are electrically connected to said ground plane (80) and have exposed side edges (24,26).

5. An IC card as claimed in any one of claims 1 to 4, characterised in that the conductive surface portions extend the lengths of the side beams (60,62).

## Patentansprüche

1. Eine IC-Karte mit einem Rahmen (16), der seitlich angeordnete gegenüberliegende Seiten (24, 26) und längsweise angeordnete vordere und rückwärtige Enden (20, 22) hat und einen Körper (50), der seitlich angeordnete seitliche Wangen (60, 62) hat, wobei jede Wange einen inneren ersten Teilbereich (86) hat, der zwischen den peripheren Teilbereichen der Abdeckung liegt, und wobei jede Wange (60, 62) einen äußeren zweiten Teilbereich hat, der auf der Außenseite der Platine (42) und den peripheren Teilbereichen der Abdeckung liegt, wobei der Rahmen eine erste und zweite leitfähige Abdeckung (52, 54) hat, die jeweils einen peripheren Teilbereich besitzt, wobei eine Abdeckung (52) eine obere Abdeckung ist, die über dem Körper (50) liegt und die andere Abdeckung (54) eine untere Abdeckung ist, die unter dem Körper (50), sowie eine Platinenbaugruppe (40) umfaßt, die am Körper (50) befestigt ist, wobei die Platinenbaugruppe (40) eine Platine (42) enthält, die eine Erdungsfläche (80) und mindestens ein auf der Platine (42) montiertes Bauelement (44) hat, dadurch gekennzeichnet,
daß die Platine (42) einen peripheren Platinenbereich hat, daß die Erdungsfläche (80) einen peripheren Teilbereich hat, der am peripheren Platinenbereich liegt und mit beiden Abdeckungen (52, 54) elektrisch verbunden ist, daß die seitlichen Wangen (60, 62) des Körpers leitfähige Oberflächenbereiche (86) haben, die mit dem peripheren Teilbereich der Erdungsfläche elektrisch verbunden sind, und daß mindestens eine der Abdeckungen (52) eine gebogene Kante (96) hat, die direkt mit den leiffähigen Oberflächenbereichen der seitlichen Wangen verbunden sind.

2. Eine IC-Karte nach Anspruch 1, dadurch gekennzeichnet, daß eine der Abdeckungen (54) eine umgebogene Kante (92) hat, die direkt gegen den Teilbereich der Erdungsfläche drückt.

3. Eine IC-Karte nach Anspruch 1 oder 2, dadurch gekennzeichnet, daß der äußere zweite Teilbereich jeder Wange (60, 62) dicker als der innere Teilbereich ist und die Kanten der Platine (42) und der Abdeckungen (52, 54) schützt.

4. Eine IC-Karte nach einem der Ansprüche 1 bis 3, dadurch gekennzeichnet, daß der Körper (50) aus einem elektrisch leiffähigen Material geformt ist, das die seitlichen Wangen (60, 62) bildet, und daß die seitlichen Wangen (60, 62) elektrisch mit der Erdungsfläche (80) verbunden sind und frei liegende seitliche Kanten (24, 26) haben.

5. Eine IC-Karte nach einem der Ansprüche 1 bis 4, dadurch gekennzeichnet, daß die leiffähigen Oberflächenbereiche sich über die Längen der seitlichen Wangen erstrecken.

## Revendications

1. Carte à circuit intégré avec une ossature (16) ayant des côtés opposés espacés latéralement (24, 26) et des extrémités avant et arrière (20, 22) espacées longitudinalement, et comprenant un corps (50) ayant des montants latéraux (60, 62) espacés latéralement, l'ossature ayant des premier et deuxième capots conducteurs (52, 54) dont chacun a une portion périphérique de capot, un des capots (52) étant un capot supérieur qui est situé au-dessus du corps (50) et l'autre capot (54) étant un capot inférieur qui est situé au-dessous du corps (50), chaque montant ayant une première portion intérieure (86) prise en sandwich entre les portions périphériques du capot, et chaque montant (60, 62) ayant une deuxième portion extérieure qui est située à l'extérieur de la carte (42) et des portions périphériques du capot, un ensemble ou assemblage de carte de circuit (40) monté sur le corps (50), l'assemblage de carte de circuit (40) comprenant une carte (42) ayant un plan de masse (80) et au moins un composant de circuit (44) monté sur la carte (42), et la carte (42) ayant une portion périphérique de carte,
caractérisée en ce que le plan de masse (80) comprend une portion périphérique de plan de masse située à la portion périphérique de la carte et reliée électriquement aux deux capots (52, 54), et en ce que les montants latéraux (60, 62) du corps ont des portions de surface conductrice (80) reliées électriquement à la portion périphérique du plan de masse et en ce qu'au moins un des capots (52) a un bord incurvé (96) qui est directement en contact avec les portions de surface conductrice des montants latéraux.

2. Carte à circuit intégré selon la revendication 1, caractérisée en ce qu'un des capots (54) a un bord recourbé (92) qui s'appuie directement sur ladite portion de plan de masse.

3. Carte à circuit intégré selon la revendication 1 ou 2, caractérisée en ce que la deuxième portion extérieure de chaque montant (60, 32) est plus épaisse que la portion intérieure et protège les bords de la carte (42) et des capots (52, 54).

4. Carte à circuit intégré selon l'une quelconque des revendications 1 à 3, caractérisée en ce que le corps (50) est moulé en un matériau électriquement conducteur qui forme les montants latéraux (60, 62), et les montants latéraux (60, 62) sont reliés électriquement audit plan de masse (80) et ont des bords latéraux (24, 26) exposés.

5. Carte à circuit intégré selon l'une quelconque des revendications 1 à 4, caractérisée en ce que les portions de surface conductrice prolongent les longueurs des montants latéraux (60, 62).
